**Europäisches Patentamt**

**European Patent Office**

**Office européen des brevets**

(19)

(11) Veröffentlichungsnummer: **0 319 869 B1**

(12) # EUROPÄISCHE PATENTSCHRIFT

(45) Veröffentlichungstag der Patentschrift :
**03.07.91 Patentblatt 91/27**

(51) Int. Cl.⁵ : **C10L 5/40**

(21) Anmeldenummer : **88120202.2**

(22) Anmeldetag : **03.12.88**

(54) Verfahren zur Herstellung eines Wickelbriketts.

(30) Priorität : **10.12.87 DE 3741778**

(43) Veröffentlichungstag der Anmeldung :
**14.06.89 Patentblatt 89/24**

(45) Bekanntmachung des Hinweises auf die
Patenterteilung :
**03.07.91 Patentblatt 91/27**

(84) Benannte Vertragsstaaten :
**AT BE DE ES FR GB IT NL**

(56) Entgegenhaltungen :
**DE-A- 3 235 038
DE-A- 3 441 197
GB-A- 723 426
GRUNDL. LANDTECHNIK, Band 20, 1970, Seiten 8-10; E. SCHEFFER: "Grundsätzliche Gesichtspunkte zur Gestaltung von
Wickelbrikettiermaschinen"**

(73) Patentinhaber : **Wolff Walsrode
Aktiengesellschaft
Postfach
W-3030 Walsrode 1 (DE)**

(72) Erfinder : **Jaeger, Ulrich, Prof. Dipl.-Ing.
Am Kleinen Schafkamp 21
W-3300 Braunschweig (DE)**
Erfinder : **Knipfelberg, Manfred, Prof. Dipl.-Ing.
Grosse Breite 6
W-3340 Wolfenbuettel (DE)**

(74) Vertreter : **Zobel, Manfred, Dr. et al
c/o BAYER AG Konzernverwaltung RP
Patentabteilung Bayerwerk
W-5090 Leverkusen (DE)**

EP 0 319 869 B1

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft Wickelbriketts und ein Verfahren zu ihrer Herstellung. Blattförmige Produkte, insbesondere Folien und Produkte auf Faserbasis, wie z.B. Papier, fallen in großem Umfang an und müssen entsprechend entsorgt werden. Bei Produktionsunterbrechungen an Anlagen zu Folienherstellung können die anfallenden Mengen so groß werden, daß ihre Entsorgung, insbesondere in kurzer Zeit, ein erhebliches Problem darstellt. Nicht weiter verdichtete derartige blattförmige Materialien, insbesondere Folien nehmen im nicht verdichteten Zustande ein sehr großes Volumen in Anspruch.

Es ist bereits aus Kunststoffberater 12 (1986) 6 bekannt, PE- und PP-Abfall aus Folienstraßen, die z.B. bei Reck-und Streckphasen durch Abriß entstehen, zu sogenanntem Schnitzelgut zu zerkleinern.

Bekannt ist weiter das diskontinuierliche Verdichten von Kunststoffabfällen zu Ballen zum Zwecke des besseren Transports. Diese Ballen werden entweder auf Deponien endgelagert oder im Müllverbrennungsanlagen wieder geöffnet, um mit anderen brennbaren Abfällen in begrenzten Mischungsverhältnissen auf Rostfeuerungen verbrannt zu werden. Das Deponieren hochwertiger Kohlenwasserstoffe ist recourcenfeindlich. Das Verbrennen in Müllverbrennungsanlagen ist kostenaufwendig, weil der Ballen in seiner großvolumigen Geometrie nicht verbrannt werden kann.

Aus Grundl. Landtechn. (1970) Seite 8 ff. ist bereits eine Wickelverdichtung für Futterpflanzen bekannt, bei der Schichten von nicht gehäckseltem Halmgut in einem Verdichtungsprozeß übereinander aufgewickelt werden, wobei der Verdichtungsraum von mehreren rotierenden Wickelwalzen begrenzt wird. Derartige Verfahren haben sich aber in der landwirtschaftlichen Praxis nicht durchgesetzt.

Es ist bereits bekannt, aus Holzspänen, Papier und Stroh Preßstränge durch statische Verdichtung kontinuierlich herzustellen.

Statisch hergestellte Verdichtungsstränge bedingen einen Zerkleinerungsvorgang des Verdichtungsgutes. Verdichtbar sind nach diesem Verfahren aber nur Stoffe, die keinen Memory-Effekt haben. Folien und Fasern erinnern sich aber nach einer statischen Verdichtung ihres Ausgangszustandes und versuchen, diesen wieder einzunehmen. Dadurch zerfällt der Strang nach der Verdichtung wieder.

Der Erfindung liegt die Aufgabe zugrunde, aus gegebenenfalls vermischten und verunreinigten blattförmigen Produkten, insbesondere solchen die aus festen Kohlenwasserstoffen und/oder aus faserhaltigen Materialien, insbesondere Papier bestehen, einen Brennstoff herzustellen, der in seiner Geometrie klein genug ist, um ohne weiteres in unterschiedlichen Prozess-Feuerungen verbrannt zu werden.

Gegenstand der Erfindung ist ein Verfahren zur Herstellung eines Wickelbriketts' aus verdichteten blattförmigen Produkten, dadurch gekennzeichnet, daß ein endloser Wickelstrang aus den verdichteten blattförmigen Produkten mit Klebstoffen und/oder Folien ummantelt und mittels einer geeigneten Vorrichtung zu Wickelbriketts abgelängt wird.

Der Außendurchmesser des endlosen Wickelstrangs beträgt in der Regel 80 bis 120 mm. An seiner Oberfläche wird der Wickelstrang durch Klebstoffe und/oder Folien, insbesondere durch aufgespritzte Schmelzkleber oder Klebefolien oder im oder am Wickelstrang befindlichen anschmelzenden Thermoplastanteilen ummantelt. In einer bevorzugten Ausführungsform wird danach durch eine beispielsweise pendelnde Trennvorrichtung, vorzugsweise ein schnelllaufendes Sägeblatt, das Brikett erzeugt, welches nun auch an den Trennflächen durch den Thermoplastanteil fixiert ist.

Wegen der fast beliebigen Zusammensetzung des Wickelstranges und wegen der Möglichkeit, bei gleicher Rotationsgeschwindigkeit des Stranges unterschiedliche Vorschübe zu fahren, erfolgt die Oberflächenbefestigung als Ummantelung mit Klebstoffen und/oder Folien.

Das Verfahren gestattet erstmalig, hochverdichtete, kleinstückige, ummantelte, schüttfähige, beliebig lagerbare, im Heizwert einstellbare Brennstoffe aus verunreinigten festen Kohlenwasserstoffen herzustellen, die einen Verkaufswert haben.

Bevorzugte Wickelbriketts haben eine Dichte größer als 0,75 und ein Volumen von 0,4 bis 2,0 dm$^3$. In einer besonders bevorzugten Ausführungsform ist mindestens die Mantelfläche fixiert.

Gegenstand der Erfindung ist schließlich die Verwendung der erfindungsgemäßen Wickelbriketts als Brennstoff, insbesondere für Drehrohrofen- und Schachtofen-Prozesse.

Der endlose Wickelstrang wird in einer bevorzugten Ausführungsform dadurch erhalten, daß die Produkte in einen Verdichtungsraum eingebracht werden, der von mehreren rotierenden Walzen begrenzt ist und daß durch Kraftübertragung von den rotierenden Walzen auf die eingeführten blattförmigen Produkte ein verdichteter Wickelstrang gebildet wird, der wieder ausgeführt wird.

Die rotierenden Walzen können zylindrisch, konisch oder hyperboloidisch sein. In einer bevorzugten Ausführungsform wird durch die Form und/oder Anordnung der rotierenden Walzen eine Axialbewegung des Wickelstranges aus dem Verdichtungsraum heraus bewirkt. Ein derartiger Wickelausschub ist erreichbar durch

1. Verwendung konischer Walzen, deren Achsen konvergierend zueinander angeordnet sind

2. durch Schrägstellen der Walzenachsen gegenüber der Achse des Verdichtungsraumes

3. durch Kombination der Möglichkeiten 1 und 2.

Es ist auch möglich, die Axialbewegung durch zusätzliche Maßnahmen zu erzeugen bzw. zu fördern, beispielsweise durch einen im Verdichtungsraum angebrachten Dorn oder eine Spindel.

In einer bevorzugten Ausführungsform sind die Walzen konisch unter ca. 10° hergestellt, bei konvergierender Anordnung der Achsen, wodurch das verdichtete Produkt in Form eines Endlosstranges durch eine dafür vorgesehene seitliche Austrittsöffnung aus dem Verdichtungsraum austritt.

Die Verdichtung des blattförmigen Produktes im Verdichtungsraum wird vorzugsweise unter gleichzeitiger Reckung und Verdrillung durchgeführt.

In einer besonders bevorzugten Ausführungsform wird das blattförmige Produkt mittels eines Aufgabetisches über einen Einzugsspalt im wesentlichen unzerkleinert in den Verdichtungsraum eingebracht dort gewickelt und unter dem einwirkenden Druck achsparallel ausgeführt.

Hierbei können die Rückhalterkräfte innerhalb des Verdichtungsraumes durch an der Austrittsöffnung angebrachte Vorrichtung, z.B. Federn variabel eingestellt werden.

Der Durchmesser des austretenden Wickelstranges kann innerhalb weiter Grenzen eingestellt werden, beispielsweise zwischen 80 und 120 mm. In einer bevorzugten Ausführungsform wird der Verdichtungsraum von rotierenden Walzen gebildet. Vorzugsweise liegt der Walzendurchmesser im Bereich von 90 mm bis 180 mm. Das Verhältnis vom Walzendurchmesser zum Wickeldurchmesser liegt vorzugsweise zwischen 0,8 und 2,5.

Die Länge der Walzen beträgt vorzugsweise 300 bis 500 mm.

Die Walzendrehzahl kann in Abhängigkeit von der anfallenden Menge des blattförmigen Materiales gesteuert werden und liegt vorzugsweise oberhalb von 100 U/Min., insbesondere zwischen 120 und 500 U/Min.

Bei den blattförmigen Produkten handelt es sich vorzugsweise um Folien, beispielsweise aus Polyolefinen wie z.B. Polypropylen oder Zellglas oder Polyamid.

Sonstige Produkte, die erfindungsgemäß verdichtet werden können, sind Produkte auf Faserbasis und Papier oder auf Zelluloseregeneratbasis. Das erfindungsgemäße Verfahren eignet sich insbesondere für die Verdichtung von Folien alleine oder von Folien in Mischung mit anderem blattförmigen Material, wobei der Folienanteil vorzugsweise mindestens 3 Gew.-% beträgt.

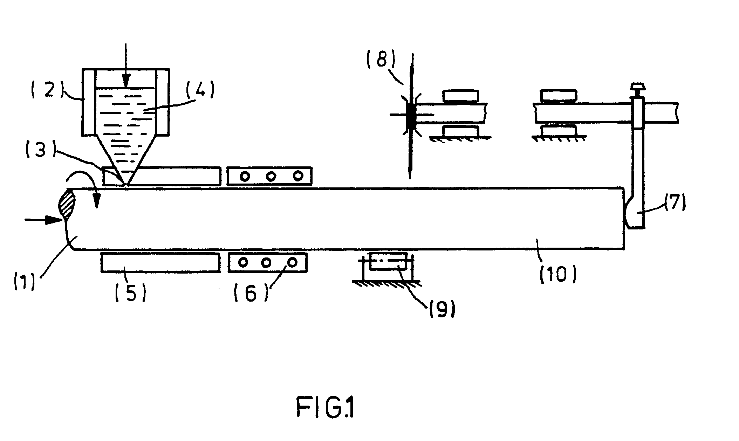

Fig. 1 zeigt im Schnitt den rotierenden und sich mit unterschiedlicher Vorschubgeschwindigkeit bewegenden Wickelstrang (1). Aus dem Kleberbehälter (2) wird durch die Düse (3) eine geringe Menge Klebestoff (4) dosiert. Durch die sich überlagernden Rotations- und Vorschubbewegungen wird die gesamte Mantelfläche in der Ummantelungsstrecke (5) benetzt. In der Nachformstrecke (6) wird die dünne Kleberschicht fest. Damit sind die Voraussetzungen für den Beginn des Abläng-Vorganges geschaffen.

Sobald der Wickelstrang den verstellbaren Anschlag (7) erreicht, wird die Pendel-Bewegung der Sägevorrichtung (8) ausgelöst. Der Trennvorgang erfolgt sowohl durch die Rotation des Stranges (1), als auch durch die schnelllaufende Säge, weshalb die Sägevorrichtung nur bis zur Strangmitte bewegt zu werden braucht. Um das Ausweichen des Stranges zu vermeiden, wird dieser durch Rollen (9) abgestützt.

Das abgelängte Brikett (10) fällt von alleine aus der Maschine.

## Ansprüche

1. Verfahren zur Herstellung eines Wickelbriketts aus verdichteten blattförmigen Produkten, dadurch gekennzeichnet, daß ein endloser Wickelstrang aus den verdichteten blattförmigen Produkten mit Klebstoffen und/oder Folien ummantelt und abgelängt wird.

2. Verfahren nach Anspruch 1, dadurch gekennzeichnet, daß die Ablängung mit einer Trennvorrichtung vorgenommen wird.

3. Verfahren nach wenigstens einem der vorhergehenden Ansprüchen, dadurch gekennzeichnet, daß die Oberfläche des Wickelstranges durch einen aufgespritzten Schmelzkleber ummantelt wird.

4. Verfahren nach wenigstens einem der vorhergehenden Ansprüche, dadurch gekennzeichnet, daß der endlose Wickelstrang eine Dichte von größer als 0,75 und einen Außendurchmesser von 80 bis 120 mm aufweist.

5. Verwendung der Wickelbriketts erhältlich nach wenigstens einem der vorhergehenden Ansprüche als Prozessbrennstoff.

## Claims

1. A method for manufacturing a wound briquette made of compressed sheet-shaped products, characterised in that a continuous wound extrusion of the compressed sheet-shaped products is covered with adhesives and/or foils and is cut to length.

2. A method according to claim 1, characterised in that the cutting to length is carried out by means of a dividing device.

3. A method according to at least one of the preceding claims, characterised in that the surface of the wound extrusion is covered by a fusion adhesive which is sprayed on.

4. A method according to at least one of the preceding claims, characterised in that the continuous wound extrusion has a density greater than 0.75 and an external diameter of between 80 and 120 mm.

5. Application of the wound briquette manufactured according to at least one of the preceding claims as a process fuel.

**Revendications**

1. Procédé de fabrication d'une briquette enroulée à partir de produits compactés en feuilles, caractérisé en ce qu'un boudin enroulé sans fin fabriqué à partir des produits compactés en feuilles est entouré de colles et/ou de films et est coupé à la longueur.

2. Procédé selon la revendication 1, caractérisé en ce que la découpe à la longueur est faite par un dispositif de sectionnement.

3. Procédé selon au moins une des revendications précédentes, caractérisé en ce que la surface du boudin enroulé est enveloppée par une colle thermofusible projetée.

4. Procédé selon au moins une des revendications précédentes, caractérisé en ce que le boudin enroulé sans fin présente une densité d'au moins 0,75 et un diamètre extérieur de 80 à 120 mm.

5. Utilisation comme combustible pour processus industriels des briquettes enroulées obtenues selon au moins l'une des revendications précédentes.

FIG.1